Europäisches Patentamt

European Patent Office

Office européen des brevets

(19)

(11) Veröffentlichungsnummer: **O 005 244**
**B1**

(12) **EUROPÄISCHE PATENTSCHRIFT**

(45) Veröffentlichungstag der Patentschrift: **28.04.82**

(21) Anmeldenummer: **79101264.4**

(22) Anmeldetag: **26.04.79**

(51) Int. Cl.³: **H 04 N 3/08, G 02 B 27/17,
G 01 S 3/78**

(54) Hochauflösender Sensor zur Erzeugung eines stabilisierten Bildes, vorzugsweise eines Wärmebildes.

(30) Priorität: **29.04.78 DE 2819056**

(43) Veröffentlichungstag der Anmeldung:
**14.11.79 Patentblatt 79/23**

(45) Bekanntmachung des Hinweises auf die Patenterteilung:
**28.04.82 Patentblatt 82/17**

(84) Benannte Vertragsstaaten:
**BE DE FR GB NL**

(56) Entgegenhaltungen:
**CH - A - 598 609
DE - A - 2 845 124
US - A - 3 068 361
US - A - 3 364 813
US - A - 3 731 098**

(73) Patentinhaber: **Licentia Patent-Verwaltungs-GmbH
Theodor-Stern-Kai 1
D-6000 Frankfurt/Main 70 (DE)**

(72) Erfinder: **Weitemeyer, Werner, Dipl.-Ing.
Finkeneck 4
D-2080 Pinneberg (DE)**
Erfinder: **Eberwein, Siegfried, Ing.grad.
Thomas-Mann-Strasse 8
D-2000 Wedel/Holstein (DE)**

(74) Vertreter: **Schickle, Gerhard, Dipl.-Ing.
Licentia Patent-Verwaltungs-GmbH Theodor-Stern-Kai 1
D-6000 Frankfurt/Main 70 (DE)**

Courier Press, Leamington Spa, England.

# Hochauflösender Sensor zur Erzeugung eines stabilisierten Bildes, vorzugsweise eines Wärmebildes

Die Erfindung bezieht sich auf einen hochauflösenden Sensor zur Erzeugung eines stabilisierten Bildes, vorzugsweise eines Wärmebildes, unter Verwendung eines aus mehreren in Reihe liegenden Einzeldetektoren bestehenden Reihendetektors zur Bilderzeugung in Elevationsoder Azimutrichtung (Höhe oder Seite des Bildes) und eines eine Szene im Gelände abtastenden Abtastspiegels zur Bilderzeugung in Azimut- oder Elevationsrichtung (Seite oder Höhe des Bildes).

Hochauflösende Sensoren sind allgemein bekannt, beispielsweise sind ein Verfahren und eine Vorrichtung zum Abtasten von Bildfeldern mit Hilfe eines Schwingspiegels (deutsche Auslegeschrift 23 58 966) und eine optische Abtasteinrichtung mit einem drehbaren Spiegel (deutsche Auslegeschrift 20 09 312) bekannt. Ein bekannter Sensor weist einen Infrarot-Detektor auf, der zur Bilderzeugung in Elevationsrichtung (Höhe des Bildes) herangezogen wird. Der IR-Detektor kann ein aus mehreren in Reihe liegenden IR-Detektoren bestehender Reihendetektor sein. Auch ist es möglich, andere Detektoren zu verwenden, wie zum Beispiel Fernsehkameras. Zur Bilderzeugung in Azimutrichtung (Seite des Bildes) ist ein Abtastspiegel vorgesehen, der eine Szene im Gelände in Azimutrichtung abtastet und ein Bild der abgetasteten Szene über eine Umlenkoptik und eine Zeilenversatzspiegel an den IR-Detektor liefert. Die Abtasfrequenz des Abtastspiegels ist festgelegt durch die Bildfolgefrequenz, gegebenenfalls multipliziert mit der Zeilenvervielfachung und liegt damit normalerweise bie 25 Hz oder einem Vielfachen davon. Diese für ein mechanisches System relativ hohe Arbeitsfrequenz läßt sich am einfachsten durch ein Resonanzsystem verwirklichen, bei dem Energiezufuhr nur zur Deckung der Verluste erforderlich ist. Aufgrund der sinusförmigen Bewegung des Spiegels wird nur der nahezu geschwindigkeitskonstante Teil der Schwingung ausgenutzt.

Hochauflösende Sensoren erfordern bei einem mobilen Einsatz eine Stabilisierung der optischen Achse im Raum, damit die Leistungsfähigkeit des Gerätes voll ausgenutzt werden kann. Die Stabilisierung erfolgt normalerweise durch eine mechanische Stabilisierung des gesamten Sensors oder durch Stabilisierung eines Spiegels, der vor dem Sensor montiert ist.

Es ist ein Bildabtast-Antriebssystem bekannt (US—PS 3 731 098), bei dem die mechanische Bewegung eines Objektes in Lichtänderungen übersetzt wird, die Lichtänderungen abgetastet und in elektrische Signale, die der mechanischen Bewegung proportional sind, umgeformt werden, die elektrischen Bewegungssignale mit einem Referenzsignal verglichen werden, das zur gewünschten mechanischen Bewegung proportional ist, um ein Fehlersignal zur entwickeln, und bei dem die mechanische Bewegung in Reaktion auf das Fehlersignal derart berichtigt wird, daß das Fehlersignal möglichst klein gemacht wird. Dieses Antriebssystem weist unter anderem zur Erzeugung eines Objektbildes auf dem Bildschirm einer Kathodenstrahlröhre einen Detektor und einen Abtastspiegel auf, der zur Bilderzeugung in Elevationsrichtung dient. Um eine Verzerrung des auf der Kathodenstrahlröhre abgebildeten Bildes zu vermeiden, ist es wichtig, daß der Abtastspiegel in genauer Übereinstimmung mit dem Ausgang des Vertikal-Oszillators abgetastet wird. Dieses wird erreicht durch die Verwendung einer Rückkopplungsschleife, in der die Winkelstellung des Abtastspiegels angezeigt wird durch Reflexion eines Lichtstrahles von der verspiegelten Rückseite des Abtastspiegels auf einen linearen Photodetektor. Hierbei wird der Lichtstrahl durch eine Lichtquelle mit zugehöriger Optik erzeugt. Bei diesem Antriebssystem, bei dem der Abtastspiegel gesteuert wird, gehen nachteiligerweise alle Störbewegungen voll ein, da die Lichtquelle fest angeordnet ist.

Es ist ein Umsetzungssystem zur Messung von Betrag und Frequenz der Verschiebung (Verstellung) eines Körpers beschrieben (US—PS 3 364 813), bei dem die Abbildung eines Strichgitters über eine verspiegelte Seite des Körpers, dessen Lage zu erfassen ist, auf einen Detektor erfolgt. Der Detektor liefert eine von der Bewegung des Körpers abhängige Impulsfolge. Bei diesem Umsetzungssystem ist jedoch eine präzise Steuerung des Abtastvorganges am Detektor nich vorgesehen.

Die Erfindung, wie sie in den Ansprüchen gekennseichnet ist, löst die Aufgabe, einen hochauflösenden Sensor der eingangs genannten Art zu schaffen, der gegenüber den bekannten Sensoren eine verbesserte Bildqualität aufweist, bei dem das stabilisierte Bild infolge seiner Stabilisierung keine Verschlechterung der Bildqualität durch Auflösungsverluste oder Verschmierungen erfährt und bei dem sich eine erhöte Sensorenempfindlichkeit erzielen läßt.

In der Zeichnung ist ein Ausführungsbeispiel nach der Erfindung dargestellt. Es zeigt

Figur 1a und 1b eine Stabilisierungsvorrichtung für einen hochauflösenden Sensor in Seitenansicht bzw. Draufsicht,

Figur 2 zwei Impulsdiagramme, und zwar sind das Detektorsignal und das Spaltenaustastsignal für einen Reihendetektor in Abhängigkeit von der Zeit dargestellt,

Figure 3 ein Schaltbild für einen Sensor mit Abtastverfahren im Multiplex-Betrieb und

Figur 4 ein Schaltbild für einen Sensor mit Abtastverfahren im Parallelbetrieb.

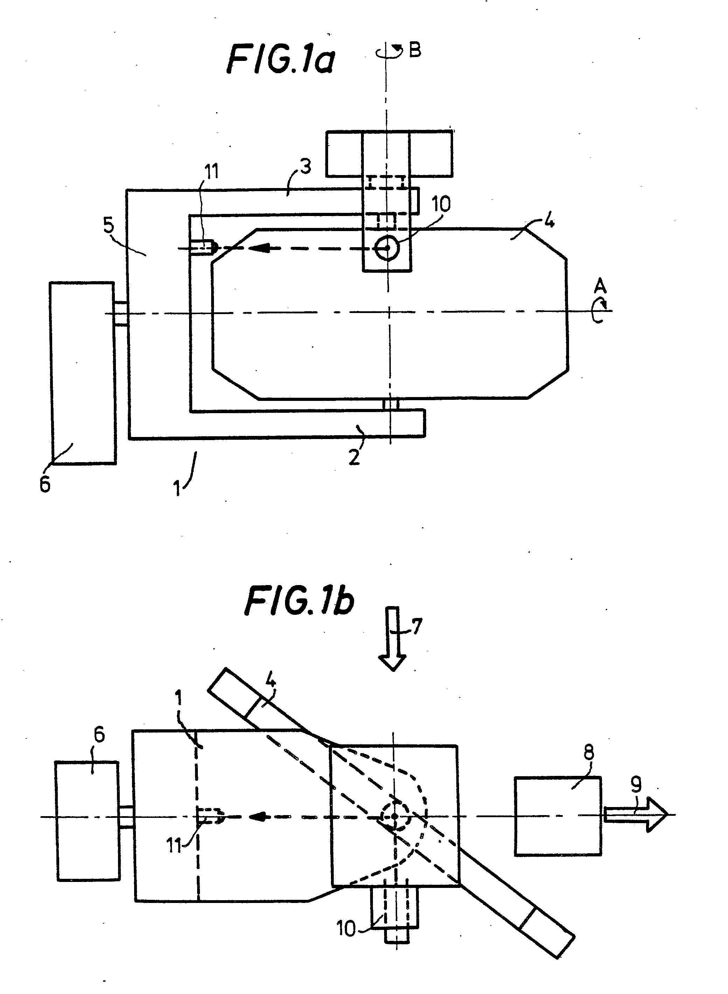

Aus den Figuren 1a und 1b ist ein gabelförmiges Bauelement 1 ersichtlich, zwischen dessen Schenkeln 2 und 3 eine Abtastspiegel 4 um seine Dreh- oder Schwenkachse dreh- oder schwenkbeweglich gelagert ist. Der Abtastspiegel 4 ist sowohl auf seiner Vorder- als auch auf seiner Rückseite verspiegelt. Der die Schenkel 2 und 3 verbindende Steg 5 ist an einem feststehenden Bauelement 6 dreh- oder schwenkbeweglich um eine horizontale Achse (Elevaionsachse A) befestigt, zu der die Dreh- oder Schwenkachse des Abtastspiegels 4 senkrecht verlauft. Die Dreh- bzw. Schwenkachse des Abtastspiegels 4 verläuft vertikal und wird als Azimutachse B bezeichnet. Um diese Achse erfolgt eine seitliche Abtastung einer Szene im Gelände durch den eine Dreh- oder Schwenkbewegung ausführenden Abtastspiegel 4. Es sei jedoch erwähnt, daß durch eine Drehung der Stabilisierungsvorrichtung um 90° die genannten Achsen vertauscht werden können, das heißt, es erfolgt dann eine Höhenabtastung der Szene im Gelände.

In Figur 1b ist die aus einer beobachteten Szene kommende Strahlung durch einen Pfeil 7 gekennzeichnet. Diese Strahlung gelangt über die vordere Spiegelfläche des Abtastspiegels 4 und ein Bildaufrichtprisma 8 an eine zeichnerisch nicht dargestellten Reihendetektor, beispielsweise an einen IR-Detektor. Die an den Reihendetektor abgegebene Strahlung ist durch einen Pfeil 9 gekennzeichnet.

Das Bildaufrichtprisma 8, das aus zwei gegeneinander verdrehbaren Teilprismen bestehen kann, ist direkt hinter dem Abtastspiegel 4 angeordnet und dient zur Kompensation der durch Schwenken des Abtastspiegels 4 hervorgerufenen Drehung des Bildes. Es kann zusätzlich als Mittel zur Rollstabilisierung des Bildes benutzt werden. Für kleine Schwenkwinkel des Abtastspiegels 4 ist die Drehung des Bildes vernachlässigbar, so daß das Bildaufrichtprisma entfallen kann.

An dem Schenkel des gabelförmigen Bauelementes 1 ist in der Nähe der Dreh- oder Schwenkachse des Abtastspiegels 4 ein in Höhe und zusätzlich in Seite stabilisierter Kollimator 10 mittels einer nicht bezeichneten Halterung befestigt. Der stabilisierte Kollimator ragt infolge der direkten Befestigung am Schenkel 3 in den vom Abtastspiegel 4 bei einer Drehbewegung ausgefüllten zylinderförmigen Raum hinein, so daß keine vollständige Drehbewegung des Abtastspiegels 4, sondern lediglich eine Schwenkbewegung möglich ist. Für eine vollständige Drehbewegung müßte eine zusätzliche Halterung vorgesehen werden, die eine Fixierung des stabilisierten Kollimators außerhalb des genannten Raumes sicherstellt.

Der stabilisiert Kollimator 10 bildet über die verspiegelte Rückseite des Abtastspiegels 4 ein Strichgitter auf einen lichtempfindlichen Zusatzdetektor 11 ab, der an der dem Abtastspiegel 4 zugewandten Seite des Steges 5 befestigt ist. Im allgemeinen wird das Strichgitter eine äquidistante Strichteilung aufweisen. In besonderen Fällen kann der Kollimator ein Strichgitter liefern, dessen Gitterabstände derart gewählt sind, daß sich konstante Bildpunktabstände ergeben. Auch kann vorgesehen werden, daß die Gitter des Strichgitters in einem oder mehreren vorgesehenen Bereichen in vorgegebenen engen, weiten, sich verkleinernden oder sich vergrößernden Abständen angeordnet sind.

Ein stabilisiertes Bild wird durch den hochauflösenden Sensor nun dadurch erzeugt, daß eine Stabilisierung in der Höhe des Bildes mit Hilfe der mechanischen Stabilisierungsvorrichtung für die gesamte Spiegelbaugruppe um die Elevationsachse A und eine Stabilisierung in der Seite des Bildes durch eine präzise Steuerung des Abtastvorganges am Reihendetektor in Abhängigkeit von der Stellung des Abtastspiegels 4 um die Azimutachse B erfolgt.

Die stabilisierung des Bildes in der Höhe erfolgt durch entprechende Drehung des Abtastspiegels 4 um die Elevationsachse. Hierbei ist zu beachten, daß neben dem Abtastspiegel 4 auch das Schwingsystem mit zurgehörigem Antrieb, der lichtempfindliche Zusatzdetektor 11 sowie die Baugruppen für die Seitenstabilisierung untergebracht sind. Der Antrieb für die Stabilisierungsbewegungen erfolgt über getriebelose Torque-Motoren. Füre die Istwert-Erfassung sind Synchros vorgesehen, die in ihrer Genauigkeit den Einsatzforderungen angepaßt werden können.

Richtbewegungen werden ausgeführt, indem die gesamte Baugruppe um die Elevationsachse gedreht wird.

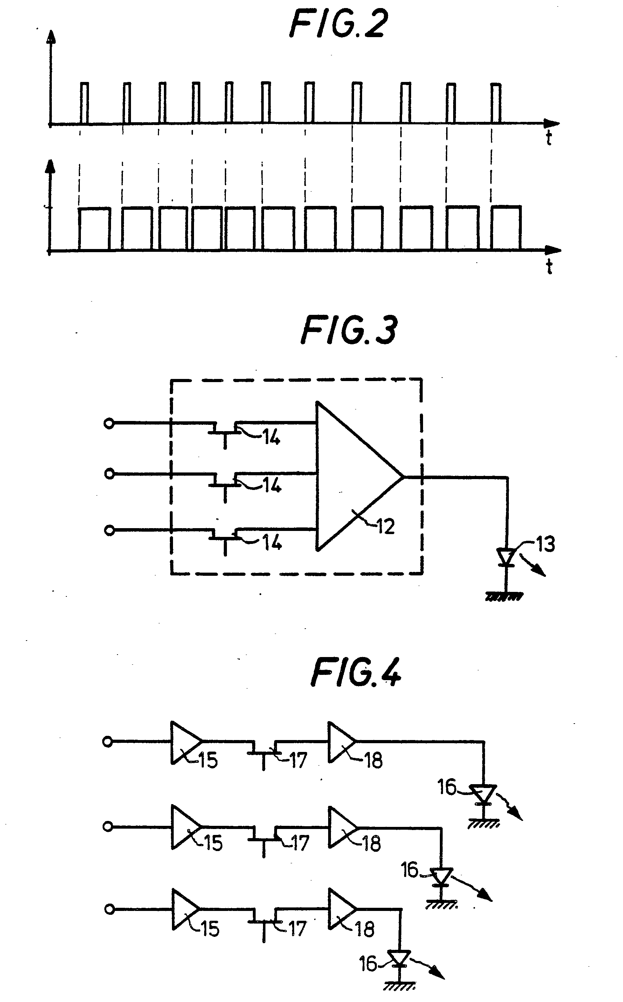

Die Stabilisierung des Bildes in der Seite erfolgt durch präzise Steuerung des Abtastvorganges am bilderzeugenden Reihendetektor. Hierzu wird von dem in seiner Höhe stabilisierten Kollimator 10 das obenbeschriebene Strichgitter über die Rückseite des Abtastspiegels 4 auf dem lichtempfindlichen Zudatzdetektor 11 abgebildet. Während einer Abtastbewegung des Spiegels 4 liefert der Zusatzdetektor 11 eine Folge von Rechteckimpulsen entsprechend der Teilung des Strichgitters (Figur 2). Bei äquidistanter Teilung und in Ruhe befindlichem Gerät ergibt sich ein Tastverhältnis der Rechteckimpulse von 1:1. Die Frequenz der Impulsfolge ist durch die Schwenk- bzw. Drehgeschwindigkeit des Abtastspiegels 4 und die Teilung des Strichgitters festgelegt. Dreht sich der hochauflösende Sensor um die Azimutachse (Seitenachse), überlagert sich diese Bewegung der Abtastbewegung des Abtastspiegels. Dadurch wird durch eine konstante Bewegung die Frequenz und durch eine Drehbeschleunigung das Tastverhältnis der Impulsfolge beeinflußt. Die absolute Lage im Raum ist durch Beginn und Ende des Strichgitters festgelegt. Benutzt man nun z. B. die Vorderflanke der L-Impulse, d. h. der Einschaltsignale, um den Austastvorgang für die Spalten, d. h. das Abfragen der einzelnen Zellen des Reihendetektors zu starten, wird die durch die Bewegungsüberlagerung am Abtastspiegel 4 bedingte räumliche Bildverschiebung kompensiert (Figur 2). Die absolute und relative Lage der Spalten eines Bildes ist festgelegt durch die Stellung des Kollimators 10. Da dieser bezüglich Seite und Höhe des Bildes stabilisiert ist, ist auch die optische Achse des Bildes stabilisiert.

Richtbewegungen mit geringer Amplitude lassen sich durch Drehen des Kollimators 10 um die Seitenachse erzielen. Bei größeren Winkeln muß zusätzlich die Mitteneinstellung des Abtastspiegels 4 verstellt werden, um im weitgehend linearen Bereich der Abtastbewegung die Detektorabtastung durchzuführen. Insgesamt ist die Größe des Schwenkbereiches jedoch begrenzt durch die sinnvoll mögliche Spiegelgröße. Diese ist beeinflußt durch den verfügbaren Raum, die konstruktive Auslegung sowie durch die optischen Reflexionsgesetze.

Die bisherige Beschreibung des Ausführungsbeispieles bezieht sich auf Sensoren mit Abtastverfahren im Multiplex-Betrieb. Wie anhand des in Figur 3 dargestellten Schaltbildes zu ersehen ist, ist bei einem derartigen Sensorbetrieb ein Verstärker 12 vorgesehen, dem eine einzige lichtemittierende Diode 13 nachgeschaltet ist. Die Anzahl der Eingänge des Verstärkers 12 entspricht der Zahl der Einzeldetektoren des Reihendetektors, wobei jeder Einzeldetektor über einen elektrischen Schalter 14 mit einem Verstärkeringange verbunden ist. Der in Figur 3 dargestellte Verstärker 12 weist insgesamt drei Eingänge auf. Die elektronischen Schalter 14 werden nacheinander geschaltet.

Bei Sensoren mit Parallelbetrieb, d. h. bei Zuordnung jeweils einer lichtemittierenden Diode 16 für jeden Einzeldetektor eines Reihendetektors gemäß dem in Figur 4 dargestellten Schaltbild, muß in jeder Verbindungsleitung zwischen einem jeden Einzeldetektor nachgeschalteten Vorverstärker 15 und jeder lichtemittierenden Diode 16 ein elektronischer Schalter 17 geschaltet sein. Zweckmäßigerweise ist jedem elektronischen Schalter 17 noch ein Endverstärker 18 nachgeschaltet. Jeder Schalter 17 schaltet das betreffende Detektor-Signal in Abhängigkeit vom Kollimatordetektorsignal ein und aus. Die "EIN"-Zeit jedes Schalters 17 ist konstant und die Steuerung des Einschaltzeitpunktes erfolgt durch die Vorderflanke des Kollimatorsignals und damit von der stabilisierten Strichplatte. Die Bildstabilisierung wird also durch Verkürzen oder Verlängern der "AUS"-Zeiten des Schalters 17 erreicht.

Bei den bisherigen Betrachtungen wurde von einer äquidistanten Teilung des Strichgitters ausgegangen. Solange der Bildaustastvorgang im weitgehend linearen Bereich der sinusförmigen Bewegung des Abtastspiegels 4 erfolgt, ist das auch sinnvoll. Da durch dieses Verfahren jedoch Spiegelbewegung und Bildaustastung fest miteinander gekoppelt sind, ist es sinnvoll, mehr als nur den linearen Bereich auszunutzen.

Bei Änderung der Gitterabstände derart, daß sich konstante Bildpunktabstände ergeben, läßt sich ein wesentlich größerer Anteil der Abtastbewegung ausnutzen. Hierdurch wird bei gleicher Schwingamplitude ein größerer Bildfeldwinkel erzielt oder bie gleichbleibendem Bildfeldwinkel eine geringe Schwingamplitude. Bei geringerer Schwingamplitude verringert sich jedoch die maximale Drehgeschwindigkeit der Schwingung, wodurch sich die Punktverweilzeit auf einer Detektorzelle und damit die Empfindlichkeit des Gerätes erhöht.

Der erfindungsgemäße hochauflösende Sensor ist vorzugsweise für eine Anwendung in Panzerfahrzeugen oder Flugzeugen vorgesehen.

**Pantentansprüche**

1. Hochauflösender Sensor zur Erzeugung eines stabilisierten Bildes, vorzugsweise eines Wärmebildes, unter Verwundung eines aus mehreren in Reihe liegenden Einzeldetektoren bestehenden Reihendetektors zur Bilderzeugung in Elevations- oder Azimutrichtung (Höhe oder Seite des Bildes) und eines eine Szene im Gelände abtastenden Abtastspiegels zur Bilderzeugung in Azimut- oder Elevationsrichtung (Seite oder Höhe des Bildes), dadurch gekennzeichnet, daß zur Stabilisierung des Bildes um die Drehoder Schwenkachse (B) des Abtastspiegels (4) oder um eine parallele Achse eine bezüglich Seite und Höhe des Bildes stabilisierter Kollimator (10) vorgesehen ist, der in an sich bekannter Weise über die verspiegelte Rückseite des Abtastspiegels (4) ein Strichgitter auf einem lichtempfindlichen Zusatzdetektor (11) abbildet, und daß die Ausgangssignale des Zusatzdetektors (11) eine Abfrage der Einzeldetektoren des Reihendetektors derart auslösen, daß eine Bildverschiebung kompensiert wird, die durch eine der Abtastbewegung des Abtastspiegels (4) überlagerte Bewegung bedingt ist (präzise Steuerung des Abtastvorganges am Reihendetektor in Abhängigkeit von der Stellung des Abtastspiegels.

2. Hochauflösender Sensor nach Anspruch 1, dadurch gekennzeichnet, daß der Zusatzdetektor (11) eine Impulsfolge liefert, durch deren Beginn und Ende die absolute Lage des Bildes in der Abtastebene festgelegt ist und deren Frequenz durch die Teilung des Strichgitters und die Dreh- bzw. Schwenkgeschwindigkeit des Abtastspiegels (4) bestimit ist, daß eine Dreh- bzw. Schwenkbewegung des Sensors um die Dreh- bzw. Schwenkachse (B) des Abtastspiegels (4) oder um eine parallele Achse zu einer Änderung der Frequenz, des Tastverhältnisses, des Beginns und/oder des Endes der Impulsfolge führt und daß eine Änderung des Beginns und/oder des Endes der Impulsfolge die Abfrage der Einzeldetektoren des Reihendetektors auslöst.

3. Hochauflösender Sensor nach Anspruch 1 oder 2, gekennzeichnet durch eine Stabilisierung des Bildes um eine senkrecht zur Dreh- bzw. Schwenkachse (B) des Abtastspiegels (4) verlaufende Achse (A) mit Hilfe einer mechanischen Stabilisierungseinrichtung.

4. Hochauflösender Sensor nach Anspruch 3, dadurch gekennzeichnet, daß die mechanische Stabilisierungsvorrichtung ein gabelförmiges Bauelement (1) aufweist, zwischen dessen Schenkeln (2, 3) der Abtastspiegel (4) um seine Dreh- bzw. Schwenkachse (B) dreh- bzw. schwenkbeweglich angeordnet ist, daß der die Schenkel (2, 3) verbindende Steg (5) des gabelförmigen Bauelementes (1) an einem feststehenden Bauelement (6) dreh- oder schwenkbeweglich um eine Achse (A) befestigt ist, die senkrecht zur Dreh- bzw. Schwenkachse (B) des Abtastspiegels (4) verläuft, und daß an dem gabelförmigen Bauelement (1) der lichtempfindliche Zusatzdetektor (11) und der stabilisierte Kollimator (10), der über die verspiegelte Rückseite des Abtastspiegels (4) das Strichgitter an den Zusatzdetektor (11) liefert, befestigt sind.

5. Hochauflösender Sensor nach Anspruch 3 oder 4, dadurch gekennzeichnet, daß die mechanische Stabilisierungsvorrichtung getriebelose Torque-Motoren zur Durchführung einer stabilisierfenden Bewegung aufweist, und daß eine Erfassung der Istwerte zur Einspeisung in den Regelkreis mittels Synchrose erfolgt.

6. Hochauflösender Sensor nach Anspruch 3 oder 4, gekennzeichnet durch ein Bildaufrichteprisma (8), das zwischen dem Abtastspiegel (4) und dem Reihendetektor angeordnet ist und das zur Kompensation der durch Schwenken des Abtastspiegels (4) hervorgerufenen Bilddrehung und/oder zur Rollstabilisierung des Bildes dient.

7. Hochauflösender Sensor nach Anspruch 1, 2 oder 4, dadurch gekennzeichnet, daß der stabilisierts Kollimator (10) ein Strichgitter liefert, dessen Gitterabstände derart gewählt sind, daß sich konstante Bildpunktabstände ergeben.

8. Hochauflösender Sensor nach Anspruch 1, 2 oder 4, dadurch gekennzeichnet, daß die Gitter des Strichgitters in einem oder mehreren vorgegebenen Bereichen in engen, weiten, sich verkleinernden oder sich vergrößernden Abständen angeordnet sind.

9. Hochauflösender Sensor nach einem der Ansprüche 1 bis 8 mit Parallelbetrieb, insbesondere bei Zuordnung jeweils einer lichtemittierenden Diode (16) für jeden Einzeldetektor des Reihendetektors, dadurch gekennzeichnet, daß zwischen jedem Einzeldetektor und der zugehörenden Diode (16) ein elektronischer Schalter (17) angeordnet ist, der das Signal des Reihendetektors in Abhängigkeit von dem Ausgangssignal des Zusatzdetektors (11) ein- und abschaltet, und daß die Stabilisierung des Bildes durch eine Verkürzung oder Verlängerung der Ausschaltzeiten des elektronischen Schalters (17) erfolgt.

10. Hochauflösender Sensor nach Anspruch 9, dadurch gekennzeichnet, daß die Einschaltzeit konstant ist, und daß die Steuerung des Einschaltzeitpunktes durch die Vorderflanke des Ausgangssignals des Zusatzdetektors (11) erfolgt.

**Claims**

1. A high-resolution sensor for producing a stabilised image, preferably a thermal image, using a series detector comprising several individual detectors in series to produce an image in an elevational or azimuth direction (height or lateral dimension of the image) and using a scanning mirror scanning a scene of the terrain in order to produce an image in the azimuth direction or in an elevational direction (lateral dimension or height of the image), characterised in that in order to stabilise the image about the rotational or pivot axis (B) of the scanning mirror (4) or about a parallel axis there is provided a collimator (10) stabilised with respect to the lateral dimension and height of the image, which displays a line grid on a light-sensitive additional detector (11) in known manner via the rear, mirror face of the scanning mirror (4), and that the output signals of the additional detector (11) trigger interrogation of the individual detectors of the series so that displacement of the image is compensated, this displacement being caused by a movement superimposed on the scanning movement of the scanning mirror (4) (precise control of the scanning process by the series detector in dependence on the position of the scanning mirror).

2. A high-resolution sensor according to claim 1, characterised in that the additional detector (11) delivers a train of pulses, the beginning and end of the said train of pulses being fixed by the absolute position of the image in the scanning plane and the frequency of the said train of pulses being determined by the division of the line grid and the rotational or pivoting speed of the scanning mirror (4); that a rotational or pivoting movement of the sensor about the rotational or pivot axis (B) of the scanning mirror (4) or about a parallel axis leads to a change in frequency, duty ratio, the beginning and/or end of the pulse train; and that a change in the beginning and/or end of the pulse train triggers interrogation of the individual detectors of the series detector.

3. A high-resolution sensor according to claim 1 or 2, characterised by stabilisation of the image about an axis (A) which is perpendicular to the rotational or pivot axis (B) of the scanning mirror (4) with the aid of a mechanical stabilising device.

4. A high-resolution sensor according to claim 3 characterised in that the mechanical stabilising device has a fork-like component (1) the scanning mirror (4) being arranged so as to rotate or pivot about its rotational or pivot axis (B) between its limbs (2, 3); that the web (5) of the fork-like component (1) which connects the limbs (2, 3) is fixed to a fixed component (6) so as to rotate or pivot about an axis (A) which is perpendicular to the rotational or pivot axis (B) of the scanning mirror (4); and that the light sensitive additional detector (11) and the stabilised collimator (10), which latter supplies the line grid to the additional detector (11) via the rear mirror face of the scanning mirror (4), are fixed to the fork-like component (1).

5. A high-resolution sensor according to claim 3 or 4, characterised in that the mechanical stabilising device has gearless torque motors for implementing a stabilising movement; and that the actual values to be fed into the control circuit are detected with the aid of synchros.

6. A high-resolution sensor according to claim 3 or 4, characterised by an image rectification prism (8) which is arranged between the scanning mirror (4) and the series detector and which serves to compensate for the rotation of the image and/or roll stabilisation of the image which is caused by pivoting the scanning mirror (4).

7. A high-resolution sensor according to claim 1, 2 or 4, characterised in that the stabilised collimator (10) delivers a line grid in which spacings between the grid are selected such that there are constant spacings between the scanning elements.

8. A high-resolution sensor according to claim 1, 2 or 4, characterised in that the mesh of the line grid is arranged in one or more predetermined regions at narrow, broad, decreasing or increasing spacings.

9. A high-resolution sensor according to any one of claims 1 to 8 with parallel operation, more particularly when associating one light emitting diode (16) with each individual detector of the series detector, characterised in that an electronic switch (17) is arranged between each individual detector and the associated diode (16), said switch switching the signal of the series detector on and off as a function of the output signal of the additional detector (11); and that the image is stabilised by shortening or lengthening switch off times of the electronic switch (17).

10. A high-resolution sensor according to claim 9, characterised in that the switch on time is constant and that the instant of switching on is controlled by the front flank of the output signal of the additional detector (11).

**Revendications**

1. Détecteur à définition élevée pour créer une image stabilisée, notamment une représentation d'un phénomène thermique, en utilisant un détecteur composé de plusieurs détecteurs individuels montés en série pour créer une image dans le sens de l'élévation ou dans le sens de l'azimut (hauteur ou côté de l'image) et un miroir explorant une scène sur un terrain pour créer l'image dans le sens de l'azimut ou dans le sens de l'élévation (côté ou hauteur de l'image), caractérisé en ce qu'il est prévu pour la stabilisation de l'image autour de l'axe de rotation ou de pivotement (B) du miroir d'exploration (4) ou autour d'un axe parallèle, un collimateur (10) stabilisé par rapport au côté et à la hauteur de l'image et qui reproduit de façon connue un réticule en forme de grille sur un détecteur photosensible additionnel (11) par l'intermédiaire de la face arrière réfléchissante du miroir d'exploration (4) et en ce que les signaux de sortie du détecteur additionnel (11) déclenchent une interrogation des différents détecteurs composant le détecteur en série de façon à compenser un décalage de l'image qui résulte d'un mouvement superposé au mouvement d'exploration du miroir d'exploration (4) (commande précise du processus d'exploration au niveau du détecteur en série en fonction de la position du miroir d'exploration).

2. Détecteur à définition élevée suivant la revendication 1, caractérisé en ce que le détecteur additionnel (11) délivre un train d'impulsions dont le début et la fin déterminent la position absolue de l'image dans le plan d'exploration et dont la fréquence est déterminée par la division du réticule de la grille et par la vitesse de rotation ou de pivotement du miroir d'exploration, en ce qu'un movement de rotation ou de pivotement du détecteur autour de l'axe de rotation ou de pivotement (B) du miroir d'exploration (4) ou autour d'un axe parallèle provoque une modification de la fréquence, du rapport d'exploration, du début et/ou de la fin du train d'impulsions et en ce qu'une modification du début et/ou de la fin du train d'impulsions déclenche l'interrogation des différents détecteurs composant le détecteur en série.

3. Détecteur à définition élevée suivant l'une des revendications 1 ou 2, caractérisé par une stabilisation de l'image autour d'un axe (A) s'étendant perpendiculairement à l'axe de rotation ou de pivotement (B) du miroir d'exploration (4) à l'aide d'un dispositif de stabilisation mécanique.

4. Détecteur à définition élevée suivant la revendication 3, caractérisé en ce que le dispositif de stabilisation mécanique est constitué par un élément (1) en forme de fourchette entre les branches (2, 3) duquel le miroir d'exploration (4) est monté de façon à pouvoir tourner ou pivoter autour de son axe (B), en ce que la traverse (5) reliant les branches (2, 3) de l'élément (1) en forme de fourchette, est fixée à un élément de construction fixe (6) de façon à pouvoir tourner ou pivoter autour d'un axe (A) qui s'étend perpendiculairement à l'axe de rotation ou de pivotement (B) du miroir d'exploration (4) et en ce que l'élément (1) en forme de fourchette porte le détecteur photosensible additionnel (11) et le collimateur stabilisé (10) qui crée, par l'intermédiaire de la face arrière réfléchissante du miroir d'exploration (4), le

réticule en forme de grille sur le détecteur additionnel (11).

5. Détecteur à définition élevée suivant l'une des revendications 3 ou 4, caractérisé en ce que le dispositif de stabilisation mécanique comporte des moteurs à transmission de couple indirecte et en ce que la détection des valeurs réelles à introduire dans le circuit de réglage s'effectue au moyen de mécanismes de synchronisation.

6. Détecteur à définition élevée suivant l'une des revendications 3 ou 4, caractérisé par un prisme redresseur d'image (8) qui est disposé entre le miroir d'exploration (4) et le détecteur en série et qui sert à la compensation de la rotation de l'image provoquée par le pivotement du miroir d'exploration et/ou à la stabilisation de roulis de l'image.

7. Détecteur à définition élevée suivant l'une des revendications 1, 2 ou 4, caractérisé en ce que le collimateur stabilisé (10) crée un réticule en forme de grille dont les intervalles sont choisis pour obtenir des intervalles de points d'image constants.

8. Détecteur à définition élevée suivant l'une des revendications 1, 2 ou 4, caractérisé en ce que les grilles formées par le réticule sont disposées à des distances étroites ou larges augmentant ou diminuant progressivement dans une ou dans plusieurs zones prédéterminées.

9. Détecteur à définition élevée suivant l'une des revendications 1 à 8 et à fonctionnement en parallèle notamment lors de l'association d'une diode (16) émettrice de lumière à chacun des différents détecteurs du détecteur en série, caractérisé en ce qu'il est prévu entre chaque détecteur individuel et la diode associée (16) un interrupteur électronique (17) qui met en et hors circuit, et en fonction du signal de sortie de détecteur additionnel (11), le signal provenant du détecteur en série et en ce que la stabilisation de l'image s'effectue en raccourcissant ou en prolongeant les durées de coupure de l'interrupteur électronique (17).

10. Détecteur à définition élevée suivant la revendication 9, caractérisé en ce que le temps de mise en circuit est constant et en ce que la commande de l'instant de mise en circuit s'effectue par le flanc avant du signal de sortie du détecteur additionnel (11).

# FIG.1a

# FIG.1b

## FIG.2

## FIG.3

## FIG.4